# EUROPÄISCHE PATENTANMELDUNG

(11) **EP 0 950 558 A1**
(43) Veröffentlichungstag der Anmeldung: **20.10.1999**
(21) Anmeldenummer: 99107619.1
(22) Anmeldetag: 16.04.1999
(51) Int. Cl.: B60L 5/00, B60M 7/00

(54) **Verfahren zur Energieversorgung und/oder Führung eines Objektes**

(30) Priorität: 16.04.1998 DE 19816762
(71) Anmelder: Götting, Hans-Heinrich jr., 31275 Lehrte (DE)
(72) Erfinder: Götting, Hans-Heinrich jr., 31275 Lehrte (DE)

(57) **Zusammenfassung**

Der Erfindung liegt die Aufgabe zugrunde, sowohl die kontaktlose Energieversorgung als auch die Positionierung und/oder Spurführung eines Objektes mit geringem Aufwand zu ermöglichen. Bisher bekannte Verfahren dienen entweder der Energieübertragung oder der Positionierung oder Führung.

Ein Objekt, z.B. ein Fahrzeug (3), kann über eine Leiterschleife (1) in der Fahrbahn (27) und eine fahrzeugseitige Koppelspule (2) mit Energie versorgt werden. Gleichzeitig kann das Energiefeld durch eine Meßeinrichtung (4) ausgemessen und zur Positionierung und/oder Spurführung des Fahrzeugs (3) benutzt werden.

Das Verfahren kann u.a. vorteilhaft genutzt werden für fahrerlose Fahrzeuge, die häufig oder überwiegend auf festgelegten Bahnen fahren.

## Beschreibung

Die Erfindung betrifft ein Verfahren nach dem Oberbegriff des Anspruchs 1.

Die Erfindung geht aus von einem Verfahren, das gelegentlich zur Energieübertragung für schienengeführte Fahrzeuge oder Maschineneinrichtungen, z.B. einer Katze auf einem Kran, benutzt wird. Ein solches Fahrzeug verfügt über einen eigenen Antrieb und meistens auch eine Steuereinrichtung zur Regulierung der Geschwindigkeit.

Des weiteren existieren sogen. fahrerlose Transponfahrzeuge, die in der Regel batteriebetrieben sind, über einen eigenen Antrieb verfügen und eine Einrichtung zur Lenkung des Fahrzeugs haben, aber nicht schienengeführt sind.

Mit WO 92/17929 wird ein induktives Energieübertragungssystem für Schienenfahrzeuge beschrieben. Die Anwendung bezieht sich z.B. auf Elektrohängefahrzeuge. Statt der sonst üblichen stromführenden Kontaktschienen wird hier die berührungslose Energieübertragung dargestellt. Entlang der Schiene ist eine Leiterschleife verlegt, die im Prinzip aus dem hin- und rückführenden Leiter besteht. Aus praktischen Gründen wurde die Energieübertragungsfrequenz mit beispielsweise 10 kHz festgelegt. Zur Erhöhung des Wirkungsgrades kann die Schleife mit einer Reihe von Kondensatoren in Resonanz gebracht werden.

Das Fahrzeug verfügt über einen eigenen elektrischen Antrieb und über eine mehrlagige energieaufnehmende Koppelspule. Auch diese Spule kann wiederum in Resonanz sein. Es ist von Vorteil, daß für die Spule auf dem Fahrzeug ein Kern aus ferritischem Material verwendet wird. Des weiteren ist es von Vorteil, daß die Primärspule, also die Spule auf der Schiene, quasi in die Sekundärspule (Fahrzeugspule) eintauchen kann. Hierdurch ist eine sehr günstige Kopplung gegeben. Beide Spulen befinden sich in unmittelbarer Nachbarschaft, so daß der Wirkungsgrad relativ hoch ist.

Mit EP 0 580 107 A1 ist ein ähnliches System beschrieben. Auch hier handelt es sich um schienengeführte Fahrzeuge, die über einen eigenen Antrieb verfügen und transformatorisch über Koppelspulen mit Energie versorgt werden. Es wird erwähnt, daß das Fahrzeug über eine Batterie verfügen kann.

Ein weiteres schienengeführtes Fahrzeug mit berührungsloser Energieübertragung ist durch EP 0 647 552 A1 bekannt. Hier werden Verbesserungen an der Schienenführung beschrieben.

Die berührungslose induktive Energieübertragung für Schienenfahrzeuge ist bisher relativ wenig eingesetzt und bekannt geworden. Eine größere Bedeutung haben ganz andere Fahrzeuge erreicht. Bei den sogen. fahrerlosen Transportfahrzeugen handelt es sich meistens um batteriebetriebene Fahrzeuge, die über ein eigenes Lenksystem verfügen. Sie sind nicht schienengeführt sondern orientieren sich z.T. an Induktionsschleifen in der Fahrbahn. Verfahren zur Führung dieser Fahrzeuge sind seit langem bekannt. Mit DE 21 37 631 C3 ist die Spurführung eines solchen fahrerlosen Transportfahrzeuges über einem einzelnen Leiter in der Fahrbahn ausführlich beschrieben. Die Meßeinrichtung verfügt über zwei Sensorelemente, die das magnetische Feld des Leitdrahtes aufnehmen.

Wenn die Meßeinrichtung und damit das Fahrzeug mittig über dem Leitdraht steht, hat die vertikal stehende Spule, die häufig auch als Differenzspule bezeichnet wird, gerade kein Signal. Die horizontal stehende Spule, die auch als Referenz- oder Summenspule bezeichnet wird, hat dann gerade das größte Signal. Eine Abweichung nach rechts oder links ergibt sofort ein Signal an der vertikal stehenden Spule. Dieses Signal hängt in der Größe von der Entfernung zum Leitdraht ab. Das Vorzeichen des Signals in Bezug auf die Referenzspule sagt aus, ob sich das Fahrzeug nach rechts oder links vom Leitdraht entfernt hat.

Verfahren, die zur kontaktlosen Energieversorgung und auch gleichzeitig zur Positionierung und/oder Spurführung von Objekten benutzt werden, sind in diesem Zusammenhang nicht bekannt.

Diese Aufgabe wird gemäß dem Kennzeichen des Patentanspruchs 1 gelöst. Hiernach wird ein Objekt positioniert und/oder geführt und gleichzeitig berührungslos von einem Energieabgeber mit Energie versorgt. Eine Meßeinrichtung stellt dabei die Lage des Energieaufnehmers in Bezug zum Energieabgeber fest. Die Meßeinrichtung muß hierzu das von dem Energieabgeber erzeugte Feld ausmessen. Das Meßergebnis wird verwendet, um Energieaufnehmer und Energieabgeber in Bezug zueinander zu positionieren und/oder zu führen.

Nach Anspruch 2 erfolgt die Energieübertragung transformatorisch. Dies ist z.B. der Fall, wenn es sich um eine tieffrequente elektromagnetische Übertragung handelt. Prinzipiell sind sehr hohe Freqeunzen z.B. über 1 GHz zwar möglich, aber schlechter geeignet als Frequenzen z.B. um 10 kHz. Sehr hohe Frequenzen müßten grundsätzlich geschirmt werden und sind bei hohen Leistungen für Personen schädlicher. Vorteilhaft ist es, wenn nach Anspruch 3 sich die Meßeinheit auf dem Objekt befindet. Dann sind die Signale zur Positionierung und/oder Führung des Objektes dort, wo sie benötigt werden.

Eine große Bedeutung des Verfahrens liegt in der Positionierung und/oder Führung von Fahrzeugen. In Anspruch 4 sind nur allgemein Fahrzeuge erwähnt. Hierzu gehören Fahrzeuge mit und ohne Fahrer, also auch automatisch geführte Fahrzeuge.

Anspruch 5 beschreibt den geeigneten Aufbau von Energieabgeber und Energieaufnehmer. Für die transformatorische Übertragung besteht die Primärspule aus mindestens einer Leiterschleife in der Fahrbahn und die Sekundärspule aus einer Koppelspule am Fahrzeug. Des weiteren wird zur Erzeugung des Feldes ein Wechselstromgenerator oder Sender benötigt. Die übertragene Energie wird auf dem Fahrzeug zum Antrieb, zur Steuerung und für andere Aufgaben benötigt. Es ist nicht besonders erwähnt aber selbstverständlich, daß es von Vorteil sein kann, die Leiterschleife und die Koppelspule durch Kondensatoren jeweils in Resonanz zu bringen. Die Koppelspule besteht in der praktischen Ausführung meistens aus mehr als einer Windung. Die Koppelspule muß nicht rund sein.

Über die Länge der Koppelspule oder Leiterschleife ist nichts festgelegt. Es ist jedoch naheliegend, daß die Koppelspule meistens kürzer ist als das Fahrzeug und daß die Leiterschleife prinzipiell auch mehr als 1000 m lang sehr kann.

Für die Energieübertragung sollen die Leiterschleife in der Fahrbahn und die Koppelspule günstig zueinander stehen. Deshalb soll nach Anspruch 6 Hin- und Rückleiterschleife parallel zur Fahrbahn verlaufen. In der Praxis wird die Leiterschleife etwa so breit sein wie die Koppelspule. Wenn die Koppelspule mittig über der Leiterschleife ist, wird bei tieffrequenter transformatorischer Übertragung die Kopplung am günstigsten sein.

Nach Anspruch 7 wird die Meßeinrichtung auf dem Fahrzeug befestigt. Dadurch ist die Position der Meßeinrichtung in Bezug auf das Fahrzeug festgelegt. Abweichungen der Meßeinrichtung nach rechts oder links ergeben sich dann aus entsprechenden Abweichungen des Fahrzeugs von der Sollspur.

Wenn die Fahrbahnmitte der Mitte zwischen Hin- und Rückleiter der parallelen Leiterschleife entsprechend soll, dann ist es günstig, die Meßeinrichtung z.B. mittig vor der Vorderachse am Fahrzeug zu befestigen, so daß die Meßeinrichtung bei normaler Fahrt mittig über der Leiterschleife steht.

Ein weiterer möglicher Einbauort ist über dem Hin- bzw. Rückleiter. Man kann die Meßeinrichtung auch so aufteilen, daß je ein Sensorelement rechts und links im gleichen Abstand zur Mitte befestigt wird. Die Meßeinrichtung ist entsprechend auszurichten.

Bei tieffrequenten Übertragungen z.B. 5 kHz wirkt überwiegend die magnetische Komponente. Nach Anspruch 8 eignen sich dann Spulen oder Hallelemente als Sensorelemente.

In Anspruch 9 ist beschrieben, daß die störende Abstrahlung im Fernfeld wesentlich reduziert werden kann, wenn die Leiterschleife gekreuzt wird. Wird beispielsweise bei einer 60 m langen Leiterschleife die Kreuzung in der Mitte vorgenommen, so wird das Störfeld in 300 m Entfernung abhängig von der Meßrichtung um mehr als Faktor 100 kleiner sein können als bei einer nicht gekreuzten Leiterschleife.

Nach Anspruch 10 kann die Meßeinrichtung so ausgelegt sein, daß die Kreuzungsstelle oder das Ende einer Leiterschleife erkannt wird. Dies kann beispielsweise festgestellt werden, wenn in der Meßeinrichung als Sensorelement eine Spule mit senkrechter magnetischer Achse verwendet wird und die Spule mittig über der Leiterschleife befestigt ist. An der Kreuzungsstelle bzw. am Ende der Leiterschleife geht das Ausgangssignal der Spule gegen Null. Bei Weiterfahrt erfolgt eine Phasenumkehr.

Damit das Fahrzeug auch ohne Leiterschleife fahren kann, wird es nach Anspruch 11 mit einer Batterie ausgerüstet. Über der nächsten Leiterschleife kann die Batterie nachgeladen werden. Des weiteren kann das batteriegetriebene Fahrzeug natürlich problemlos über Kreuzungsstellen in der Leiterschleife fahren.

An Verzweigungsstellen oder Fahrbahnkreuzungen müssen verschiedene Leiterschleifen installiert werden. Die Meßeinrichtung kann so gestaltet sein, daß sie der gewünschten Leiterschleife folgen kann. Dazu kann die Meßeinrichtung beispielsweise frequenzselektiv sein. Dann müssen allerdings die betreffenden Leiterschleifen verschiedene Frequenzen haben. Die Koppelspule im Fahrzeug muß dann entsprechend breitbandig oder in der Resonanz nachstimmbar sein.

Um Energie zu sparen, möglichst wenig störende Felder zu erzeugen und/oder zur einfachen Gestaltung der Spurführung des Fahrzeugs können nach Anspruch 13 die Leiterschleifen ein- und ausgeschaltet werden. Nur die jeweils benötigte Leiterschleife muß eingeschaltet sein.

Üblicherweise läßt sich ein Fahrzeug stabil lenken, wenn sich die Meßeinrichtung in Fahrtrichtung vorn am Fahrzeug befindet. Für Fahrzeuge, die auch rückwärts fahren können, sollte nach Anspruch 14 auch hinten am Fahrzeug eine Meßeinrichtung vorgesehen sein.

Wenn das Fahrzeug vorn und hinten lenken kann, können die Hinterräder in der Spur der Vorderräder laufen. Dadurch wird die sogen. Hüllkurve, also die benötigte Fahrbahnbreite geringer.

Nach Anspruch 15 sollte sich dann die Koppelspule in der Fahrzeugmitte befinden. Durch die beiden Meßeinrichtungen und ggf. durch Verwendung weiterer Sensoren, z.B. Inkrementalgeber und Lenkpotentiometer, kann das Fahrzeug so geführt werden, daß die Koppelspule in einer günstigen Position über der Leiterschleife gehalten wird.

Für die Feststellung des Standortes eignen sich nach Anspruch 16 Referenzmarken. Hiermit wird auch die Position längs zur Leiterschleife erfaßt. Als Referenzmarken eignen sich Transponder, Magnete und optische Marken. Das entsprechende Lesegerät befindet sich am Fahrzeug.

Nach Anspruch 17 kann das Schalten der Leiterschleifen von der Position des Fahrzeugs abhängig gemacht werden. Sobald detektiert wurde, daß sich das Fahrzeug am Ende einer Leiterschleife oder an einer Abzweigstelle befindet, kann die neue weiterführende Leiterschleife zugeschaltet und die bisher benutzte Leiterschleife ahgeschaltet werden.

Im Übergangsbereich von einer Leiterschleife auf die nächste Leiterschleife oder an der Kreuzungsstelle einer Leiterschleife bietet es sich nach Anspruch 18 an, zwei getrennte Koppelspulen zu verwenden. Zweckmäßigerweise befinden sich die Koppelspulen hintereinander, so daß zumindest die eine oder andere Koppelspule Energie liefern kann. Zwei Koppelspulen sind von Vorteil, wenn man auf andere Energiequellen, z.B. den Akkumulator, verzichten will.

Nach Anspruch 19 wird die Meßeinrichtung so befestigt, daß sie mitgelenkt wird. Hierzu bieten sich die gelenkten Räder, Radschenkel, Spurstangen oder sonstige Vorrichtungen an. Die mitgelenkte Meßeinrichtung hat bei Kurvenfahrt vor der Vorderachse eine günstige Position. Die Meßeinrichtung wird dann der Kurve sozusagen vorausschauend nachgeführt.

Ausführungsbeispiele der Erfindung sind in den nachfolgenden Zeichnungen dargestellt und werden im folgenden näher beschrieben. Es zeigen
Fig. 1 die Energiekopplung im Querschnitt
Fig. 2 die Draufsicht einer Fahrzeugführung
Fig. 3 das Schalten von Leiterschleifen.

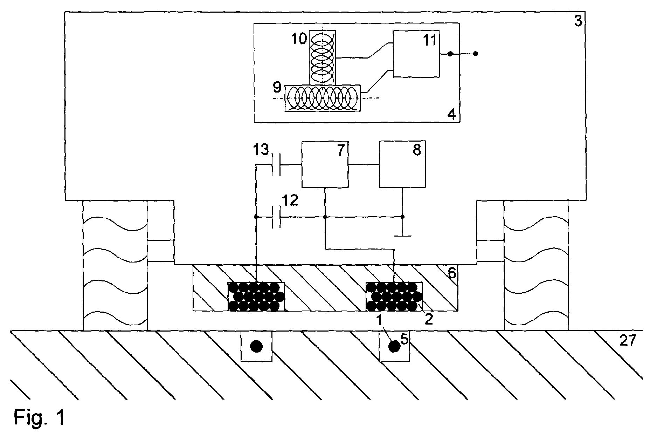

Ein mögliches Ausführungsbeispiel der Energiekopplung zeigt Fig.1 im Querschnitt. Die Leiterschleife (1) mit dem Hin- und Rückleiter befindet sich vergossen in einer Nut (5) in der Fahrbahn (27). Darüber befindet sich die Koppelspule (2). Des weiteren ist zur Feldverstärkung ein zusätzlicher Ferritkörper (6) zu sehen. Die Koppelspule ist am Fahrzeug (3) möglichst tief befestigt, so daß möglichst viel Energie übertragen werden kann. Es ist aber zu beachten, daß natürlich wegen Unebenheiten und dergl. ein gewisser Mindestabstand zwischen der Koppelspule (2) und der Fahrbahn (27) eingehalten werden muß. Die Koppelspule (2) kann grundsätzlich so aufgehängt sein, daß sie nach oben hin zum Fahrzeug (3) ausweichen kann. Dazu könnte Koppelspule (2) federnd aufgehängt sein und/oder mit einem eigenen Radsatz nahe über dem Boden gehalten werden. Es können Abstände von deutlich unter 10 mm zwischen der Koppelspule (2) und der Fahrbahn (27) realisiert werden.

Des weiteren ist im Fahrzeug (3) ein Schwingkreiskondensator (12) zur Herstellung der Resonanz und ein Auskoppelkondensator (13) zu sehen. Wenn die Leiterschleife (1) verschiedene Frequenzen haben kann, sollte auch der Schwingkreiskondensator (12) entsprechend größer oder kleiner geschaltet werden können. Über die Gleichrichtung (7) kann die Energie der Last (8) zur Verfügung gestellt werden. Die Last (8) kann aus hier nicht dargestellten Motoren, Steuerungskomponenten einem Akkumulator oder anderen Baugruppen bestehen.

Die Meßeinrichtung (4) besteht beispielsweise aus der Differenzspule (9), die das horizontale magnetische Feld aufnimmt, der Summenspule (10), die das senkrecht stehende magnetische Feld aufnimmt sowie einer Auswerteeinrichtung (11). Die Auswerteeinrichtung (11) übernimmt die Verstärkung der Sensorsignale, so daß nicht dargestellte Verstärker bzw. Motoren zur Lenkung des Fahrzeugs angesteuert werden können. Die Auswerteeinrichtung (11) kann einen Rechner enthalten.

Die Meßeinrichtung (4) hat einen günstigen Standort in Fahrtrichtung vor dem Fahrzeug mittig angeordnet in geeigneter Höhe. Diese Höhe kann z.B. der Breite der Leiterschleife (1) entsprechen. Wegen der Übersichtlichkeit wurde die Meßeinrichtung (4) in der Fig. 1 jedoch im oberen Teil des Fahrzeugs (3) dargestellt.

Wie aus der Fig. 1 zu ersehen ist, läßt sich die Leiterschleife (1) sowohl für die Energieübertragung als auch für die Spurführung des Fahrzeugs (3) verwenden. Es ist bei günstiger Ausgestaltung des Verfahrens sichergestellt, daß die Koppelspule (2) immer optimal über der Leiterschleife (1) geführt wird.

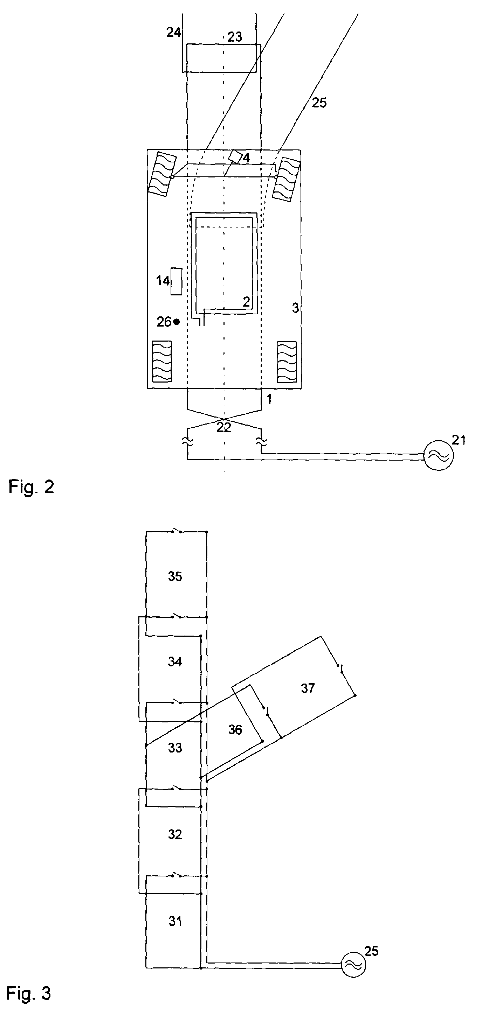

Die Draufsicht einer Fahrzeugführung wird durch Fig. 2 verdeutlicht. Es ist das Fahrzeug (3) mit der etwa mittig angeordneten Koppelspule (2) und der Meßeinrichtung (4) zu sehen. Die Leiterschleife (1) wird getrieben durch den Wechselstromgenerator oder Sender (21). Die Leiterschleife (1) hat an der Kreuzungsstelle (22) den Hin- und Rückleiter vertauscht. Hierdurch werden im Fernfeld die störenden Signale wesentlich reduziert. Am Leiterschleifenende (23) der Leiterschleife (1) kann die Spurführung und Energieübertragung prinzipiell von der Leiterschleife (24) übernommen werden. Das Fahrzeug (3) verläßt jedoch die ursprüngliche Spur und wird bereits der Leiterschleife (25) nachgeführt.

Dazu kann das Fahrzeug (3) den Befehl gehabt haben, an der in oder auf der Fahrbahn befindlichen Referenzmarke (26) in die neue Fahrtrichtung abzubiegen bzw. der neuen Frequenz der Leiterschleife(25) zu folgen. Die Leiterschleifen (1) und (25) haben verschiedene Frequenzen. Das Detektieren der Referenzmarke (27) geschieht durch den am Fahrzeug 3 befestigten Leser (14).

Prinzipiell kann das Fahrzeug jederzeit von den Leiterschleifen abweichen. Hierzu sind jedoch dann in der Regel weitere Sensoren, z.B. Inkrementalgeber, Lenkwinkelpotentiometer vorteilhaft, insbesondere dann, wenn die Strecken lang sind. Des weiteren ist es vorteilhaft, wenn das Fahrzeug einen Akku hat, so daß es ebenfalls die Leiterschleife (1) verlassen kann oder aber auch die Kreuzungsstelle (22) überbrücken kann. Falls dieser Akkumulator nicht vorhanden ist, könnte das Fahrzeug evtl. aufgrund seiner Massenträgheit über die Kreuzungsstelle (22) rüber rutschen oder es verfügt über zwei getrennte Koppelspulen (2), die hintereinander angeordnet sind, so daß zumindest eine der beiden Koppelspulen ausreichend Energie liefert, um das Fahrzeug weiter zu versorgen.

Das vorteilhafte Schalten von Leiterschleifen ist in Fig. 3 dargestellt. Es sollte möglichst immer nur die Leiterschleife eingeschaltet sein, die auch benötigt wird. Dabei können mehrere Leiterschleifen (31) bis (37) von einem Wechselstromgenerator oder Sender (25) gespeist werden. Zu sehen ist eine gerade Streckenführung mit den Leiterschleifen (31) - (35) und ein Abzweig mit den Leiterschleifen (36, 37). Die Leiterschleifen werden in diesem Beispiel über Relaiskontakte geschaltet.

Vorteilhaft wäre es, wenn die Leiterschleife möglichst klein, evtl. auch gekreuzt ist. Dann sind die Störausstrahlungen, die andere in der Nachbarschaft befindliche Einrichtungen stören könnten und u.U. sogar für Personen beeinträchtigend oder gesundheitsschädlich sein können, am kleinsten. Wenn eine Leiterschleifenlänge nicht mehr als die Hälfte der Fahrzeuglänge ausmacht, kann bei günstiger Auslegung dafür gesorgt werden, daß die betreffende Schleife immer durch das Fahrzeug abgedeckt bleibt.

## Patentansprüche

1. Verfahren zur kontaktlosen Energieversorgung sowie Positionierung und/oder Führung eines Objektes, bestehend aus einer Einrichtung mit mindestens einem Energieabgeber und einem davon getrennten Energieaufnehmer auf dem Objekt, sowie aus einer Meßeinrichtung, die die Lage des Energieaufnehmers in Bezug auf den Energieabgeber feststellt, dadurch gekennzeichnet,
daß die Meßeinrichtung das Energiefeld ausmißt und
daß von der Meßeinrichtung Signale erzeugt werden, mit denen Energieaufnehmer und Energieabgeber in Bezug zueinander positioniert und/oder geführt werden können.

2. Verfahren nach Anspruch 1 dadurch gekennzeichnet,
daß die Energie im wesentlichen transformatorisch vom Energieabgeber auf den Energieaufnehmer übertragen wird.

3. Verfahren nach einem der vorhergehenden Ansprüche dadurch gekennzeichnet,
daß sich die Meßeinrichtung auf dem Objekt befindet.

4. Verfahren nach einem der vorhergehenden Ansprüche dadurch gekennzeichnet,
daß es sich bei dem Objekt um ein Fahrzeug handelt.

5. Verfahren nach einem der vorhergehenden Ansprüche dadurch gekennzeichnet,
daß es sich bei dem Energieabgeber im wesentlichen um einen Wechselstromgenerator oder Sender mit mindestens einer Leiterschleife in der Fahrbahn handelt und
daß der Energieaufnehmer u.a. aus einer Koppelspule am Fahrzeug besteht und
daß die Energie als Versorgungsenergie für das Fahrzeug benötigt wird.

6. Verfahren nach einem der vorhergehenden Ansprüche dadurch gekennzeichnet,
daß die Leiterschleife in der Fahrbahn gestreckt ist und Hin- und Rückleiter im wesentlichen parallel zur Fahrbahn liegen.

7. Verfahren nach einem der vorhergehenden Ansprüche dadurch gekennzeichnet,
daß die Meßeinrichtung auf dem Fahrzeug so fixiert ist, daß es die Position des Fahrzeugs in Bezug auf die Fahrbahn oder Fahrbahnmitte feststellt und
daß von der Meßeinrichtung Signale geliefert werden, mit denen das Fahrzeug auf der Fahrbahn geführt werden kann.

8. Verfahren nach einem der vorhergehenden Ansprüche dadurch gekennzeichnet,
daß das Energiefeld im wesentlichen magnetisch ist und
daß es sich bei den Energiesensoren in der Meßeinrichtung um Spulen oder Hallelemente handelt.

9. Verfahren nach einem der vorhergehenden Ansprüche dadurch gekennzeichnet,
daß die Leiterschleife in der Fahrbahn mindestens einmal gekreuzt ist, so daß Hin- und Rückleiter die Seite wechseln und
daß hierdurch die Abstrahlung im Fernfeld wesentlich geschwächt wird.

10. Verfahren nach einem der vorhergehenden Ansprüche dadurch gekennzeichnet,
daß von der Meßeinrichtung die Kreuzungsstelle und/oder das Leiterschleifenende erkannt wird, so daß das Fahrzeug hierdurch seine Position entlang der Fahrbahn feststellen kann.

11. Verfahren nach einem der vorhergehenden Ansprüche dadurch gekennzeichnet,
daß das Fahrzeug bei Verlassen der Leiterschleife und/oder an Kreuzungsstellen zumindest zeitweise mit einer bordeigenen Batterie weiterfahren kann.

12. Verfahren nach einem der vorhergehenden Ansprüche dadurch gekennzeichnet,
daß verschiedene Leiterschleifen in der Fahrbahn vorhanden sind,
daß die Leiterschleifen parallel zueinander liegen und/oder sich auch überschneiden können und
daß das Fahrzeug bei Bedarf die Fahrtrichtung wechseln kann, um einer dieser Leiterschleifen zu folgen.

13. Verfahren nach Anspruch 12 dadurch gekennzeichnet,
daß die Leiterschleifen schaltbar sind.

14. Verfahren nach einem der vorhergehenden Ansprüche dadurch gekennzeichnet,
daß auf dem Fahrzeug vorn und hinten jeweils eine Meßeinrichtung vorhanden ist und
daß das Fahrzeug vorn und/oder hinten gelenkt werden kann.

15. Verfahren nach Anspruch 14 dadurch gekennzeichnet,
daß die Koppelspule zur Energieaufnahme sich in der Mitte des Fahrzeugs befindet und
daß sie dann auch bei Kurvenfahrt optimal mittig über der Leiterschleife in der Fahrbahn geführt werden kann.

16. Verfahren nach einem der vorhergehenden Ansprüche dadurch gekennzeichnet,
daß sich entlang der Fahrbahn Referenzmarken befinden und
daß diese Referenzmarken durch bordeigene Mittel festgestellt werden können, so daß auch eine Aussage über die Position des Fahrzeugs entlang der Fahrbahn gegeben ist.

17. Verfahren nach Anspruch 13 dadurch gekennzeichnet,
daß die Position des Fahrzeugs entlang der Fahrbahn vom Fahrzeug selbst oder von einer Steuerung an der Fahrstrecke erkannt wird und
daß jeweils nur die vom Fahrzeug benötigte Leiterschleife eingeschaltet wird.

18. Verfahren nach einem der vorhergehenden Ansprüche dadurch gekennzeichnet,
daß sich auf dem Fahrzeug jeweils zwei Energieaufnehmer bzw. zwei Koppelspulen hintereinander befinden, so daß auch bei einer gekreuzten Leiterschleife in der Fahrbahn oder bei zwei verschiedenen Leiterschleifen in der Fahrbahn mindestens eine Koppelspule am Fahrzeug Energie aufnehmen kann.

19. Verfahren nach einem der vorhergehenden Ansprüche dadurch gekennzeichnet,
daß die Meßeinheit mitgelenkt wird.
